# EUROPÄISCHE PATENTSCHRIFT

(11) **EP 2 248 212 B1**
(45) Veröffentlichungstag und Bekanntmachung des Hinweises auf die Patenterteilung: **07.09.2011**
(21) Anmeldenummer: 08706002.6
(22) Anmeldetag: 02.02.2008
(51) Int. Cl.: H01M 8/02, H01M 8/24, H01M 8/12

(54) **VERFAHREN ZUR HERSTELLUNG EINER ELEKTRISCH ISOLIERENDEN DICHTUNGSANORDNUNG FÜR EINEN BRENNSTOFFZELLENSTACK UND DICHTUNGSANORDNUNG FÜR EINEN BRENNSTOFFZELLENSTACK**
METHOD FOR PRODUCING AN ELECTRICALLY INSULATING SEALING ARRANGEMENT FOR A FUEL CELL STACK AND SEALING ARRANGEMENT FOR A FUEL CELL STACK
PROCÉDÉ DE FABRICATION D'UN SYSTÈME D'ÉTANCHÉITÉ ÉLECTRO-ISOLANT POUR UNE PILE DE CELLULES ÉLECTROCHIMIQUES ET SYSTÈME D'ÉTANCHÉITÉ POUR UNE PILE DE CELLULES ÉLECTROCHIMIQUES

(43) Veröffentlichungstag der Anmeldung: 10.11.2010
(73) Patentinhaber: ElringKlinger AG, 72581 Dettingen (DE); Forschungszentrum Jülich GmbH, 52425 Jülich (DE)
(72) Erfinder: MAIER, Uwe, 72760 Reutlingen (DE); KIEFER, Thomas, 72574 Bad Urach (DE); TIETZ, Frank, 52428 Jülich (DE)
(74) Vertreter: Hörner, Andreas
(86) Internationale Anmeldenummer: PCT/EP2008/000844
(87) Internationale Veröffentlichungsnummer: WO 2009/095039

(56) Entgegenhaltungen:
- WO-A-2004/109821
- DE-A1-102005 002 435
- DE-A1-102005 048 213
- JP-A- 9 073 910
- US-A- 3 658 597
- US-A- 5 942 348
- US-A1- 2004 104 544
- US-A1- 2006 060 633

## Beschreibung

Die vorliegende Erfindung betrifft ein Verfahren zur Herstellung einer elektrisch isolierenden Dichtungsanordnung zum Abdichten zwischen zwei metallischen Bauteilen eines Brennstoffzellenstacks.

Die Herstellung geeigneter Dichtungssysteme ist ein Schwerpunkt bei der Entwicklung von Hochtemperatur-Brennstoffzellensystemen (sogenannten SOFC-Brennstoffzellen).

Solche Dichtungssysteme müssen hohen Anforderungen an die Gasdichtigkeit, elektrische Isolation, chemische Stabilität und Toleranz gegenüber mechanischer Beanspruchung (insbesondere beim Thermozyklieren) genügen.

Es ist bereits bekannt, zur Abdichtung in Brennstoffzellensystemen Glaslotdichtungen einzusetzen. Solche Glaslotdichtungen zeigen eine gute Gasdichtigkeit, elektrische Isolation und chemische Beständigkeit. Das Glaslot wird beim Fügezyklus weich, bevor es kristallisiert und aushärtet. Durch keramische Abstandshalter kann der Dichtspalt der Glastlotdichtung eingestellt werden. Übliche Dicken liegen dabei im Bereich von 300 µm +/- 50 µm.

Solche Glaslotdichtungen zeigen aber nur geringe Toleranzen gegenüber mechanischer Beanspruchung beim Thermozyklieren, bedingt durch die schlechte Wärmeleitfähigkeit und das spröde Verhalten des Werkstoffes.

Ferner ist es bekannt, zur Abdichtung in Brennstoffzellensystemen Metalllotdichtungen einzusetzen. Solche Metalllotdichtungen weisen besonders bei der Thermozyklierung aufgrund ihres duktilen Verhaltens Vorteile auf. Das Metalllot ist jedoch als elektrischer Isolator ungeeignet, weshalb eine zusätzliche Isolationsschicht vorgesehen werden muss. Es ist beispielsweise bekannt, als Isolationsschicht eine im Vakuumplasmaspritzverfahren hergestellte Aluminium-Magnesium-Spinell-Schicht zu verwenden.

Die Herstellung einer solchen Isolationsschicht mittels des Vakuumplasmaspritzverfahrens ist jedoch ein aufwendiger und kostenintensiver Prozessschritt. Aufgrund der herstellungsbedingten Toleranzen müssen entsprechend hohe Sicherheitsfaktoren gewählt werden, was in einer hohen Schichtdicke der Isolationsschicht resultiert, womit ein erhöhter Materialverbrauch verbunden ist. Außerdem induziert eine dickere Isolationsschicht des Aluminium-Magnesium-Spinells, welcher einen anderen thermischen Ausdehnungskoeffizienten aufweist als die im Brennstoffzellenstack verwendeten Stahlmaterialien, Eigenspannungen. Diese Eigenspannungen können Risse und damit Undichtigkeiten im Brennstoffzellensystem verursachen.

Die EP 1 325 774 A1 offenbart ein Verfahren zur Herstellung einer für Brennstoffzellen geeigneten Dichtungsanordnung, die zwei keramische Schichten umfasst, welche durch eine silberhaltige Zwischenschicht zu einem Verbundkörper verbunden sind. Der Verbundkörper wird dann unter Zuhilfenahme eines silberhaltigen Lotes mit einer Metallschicht verlötet.

Der vorliegenden Erfindung liegt die Aufgabe zugrunde, ein Verfahren zur Herstellung einer elektrisch isolierenden Dichtungsanordnung zum Abdichten zwischen zwei metallischen Bauteilen eines Brennstoffzellenstacks zu schaffen, mittels welchem eine im Betrieb eines Brennstoffzellensystems langzeitstabile Dichtungsanordnung mit guter Gasdichtigkeit und guter elektrischer Isolationsfähigkeit herstellbar ist.

Diese Aufgabe wird erfindungsgemäß durch ein Verfahren nach Anspruch 1 gelöst.

Das Verbinden der Isolationsschicht mit den abzudichtenden Bauteilen kann dabei gleichzeitig mit der Erzeugung der Isolationsschicht oder nach dem Erzeugen der Isolationsschicht erfolgen.

Das Substrat, auf welches das Isolationsschicht-Vormaterial nasschemisch aufgetragen wird, kann eines der abzudichtenden Bauteile oder ein anderes Element des Brennstoffzellenstacks sein.

Die Isolationsschicht weist vorzugsweise bei der Betriebstemperatur des Brennstoffzellenstacks (im Bereich von 600°C bis 800°C) einen elektrischen Flächenwiderstand von mindestens 1 kQ·cm², insbesondere von mindestens 5 kΩ·cm², auf.

Der Erfindung liegt das Konzept zugrunde, mit Hilfe von kostengünstigen nasschemischen Routen (beispielsweise Siebdruckverfahren oder Auftragen mittels eines Dispensers) Elemente oder daraus resultierende Verbindungen (beispielsweise Oxide oder Oxidmischungen) durch einen geeigneten Sinterprozess zu verdichten.

Eine besonders dichte Isolationsschicht kann dabei durch Flüssigphasensintern erzeugt werden.

Beim Flüssigphasensintern bildet mindestens eine zu versinternde Komponente zumindest einen geringen Schmelzanteil aus. Dieser Schmelzanteil wirkt als Kleber für die zu versinternden Partikel.

Alternativ hierzu kann auch vorgesehen sein, dass die Isolationsschicht durch Reaktivsintern erzeugt wird.

Beim Reaktivsintern reagieren zu versinternde Komponenten exotherm miteinander, was zu einer lokalen Temperaturerhöhung führt.

Besonders günstig ist es, wenn das Isolationsschicht-Vormaterial MgO enthält. Durch die Zugabe von MgO kann der thermische Ausdehnungskoeffizient der Isolationsschicht an den thermischen Ausdehnungskoeffizienten anderer Elemente des Brennstoffzellenstacks, insbesondere an den thermischen Ausdehnungskoeffizienten der abzudichtenden Bauteile angepasst werden.

Im Hinblick auf einen möglichst hohen Isolationswiderstand und einen an die anderen Komponenten des Brennstoffzellenstacks angepassten thermischen Ausdehnungskoeffizienten ist es ferner günstig, wenn das Isolationsschicht-Vormaterial mit Yttrium oder mit einem Lanthanoiden (von La bis Lu) stabilisiertes Zirkoniumdioxid, Aluminiumoxid, einen Mg-Al-Spinell und/oder Barium-Silikat enthält.

Ferner ist bei einer bevorzugten Ausgestaltung des erfindungsgemäßen Verfahrens vorgesehen, dass das Isolationsschicht-Vormaterial einen Zusatzstoff zur Absenkung der Schmelztemperatur der Isolationsschicht enthält.

Ein solcher Zusatzstoff kann insbesondere ein Borat oder Phosphat sein.

Es ist daher beispielsweise von Vorteil, wenn das Isolationsschicht-Vormaterial Li₂O-B₂O₃ und/oder NbO₅-B₂O₃ enthält.

Ferner ist es zur Absenkung der Schmelztemperatur der Isolationsschicht von Vorteil, wenn das Isolationsschicht-Vormaterial Phosphat enthält.

Die Isolationsschicht kann gleichzeitig mit ihrer Erzeugung mit den abzudichtenden Bauteilen fest verbunden werden.

Alternativ hierzu kann auch vorgesehen sein, dass die Isolationsschicht nach ihrer Erzeugung mit mindestens einem der abzudichtenden Bauteile verlötet wird.

Die Isolationsschicht wird mit mindestens einem der abzudichtenden Bauteile mittels eines metallischen Lotes verlötet. Ein solches metallisches Lot weist eine hohe Duktilität auf, so dass beim Thermozyklieren des Brennstoffzellenstacks auftretende Scherkräfte über das duktile Verhalten des metallischen Lots ausgeglichen werden können.

Bei einer besonders bevorzugten Ausführungsform der Erfindung ist vorgesehen, dass die Isolationsschicht mit einem von den abzudichtenden Bauteilen verschiedenen Zwischenelement fest verbunden wird.

Ein solches Zwischenelement kann insbesondere dazu dienen, die Isolationsschicht von einer Lotschicht der Dichtungsanordnung zu trennen, wodurch verhindert wird, dass das Lotmaterial mit dem Material der Isolationsschicht reagiert, was eine Verringerung der elektrische Isolationswirkung der Isolationsschicht und/oder eine Versprödung des Verbunds aus der Isolationsschicht und der Lotschicht zur Folge haben könnte.

Dabei kann vorgesehen sein, dass die Isolationsschicht bereits gleichzeitig mit ihrer Erzeugung mit dem Zwischenelement verbunden wird.

Bei einer bevorzugten Ausführungsform der Erfindung ist vorgesehen, dass das Zwischenelement ein metallisches Material umfasst.

Insbesondere kann das Zwischenelement aus demselben metallischen Material gebildet sein wie eines der abzudichtenden Bauteile.

Das Zwischenelement wird vorzugsweise mit einem der abzudichtenden Bauteile fest verbunden.

Insbesondere kann vorgesehen sein, dass das Zwischenelement mit einem der abzudichtenden Bauteile verlötet wird.

Besonders günstig ist es, wenn das Zwischenelement mit einem der abzudichtenden Bauteile mittels eines metallischen Lotes verlötet wird. Die Verwendung eines metallischen Lotes bietet den Vorteil, dass auftretende Scherkräfte beim Thermozyklieren über das duktile Verhalten des metallischen Lots ausgeglichen werden können.

Die vorliegende Erfindung betrifft ferner eine Dichtungsanordnung zur Abdichtung zwischen zwei metallischen Bauteilen eines Brennstoffzellenstacks.

Der vorliegenden Erfindung liegt die weitere Aufgabe zugrunde, eine solche Dichtungsanordnung zu schaffen, welche im Betrieb des Brennstoffzellenstacks langzeitstabil ist und eine gute Gasdichtigkeit und gute elektrische Isolation gewährleistet.

Diese Aufgabe wird erfindungsgemäß gelöst durch eine Dichtungsanordnung nach Anspruch 21.

Dabei kann das Substrat eines der abzudichtenden Bauteile oder ein anderes Element des Brennstoffzellenstacks sein.

Besonders günstig ist es, wenn die elektrisch isolierende, keramische Isolationsschicht die einzige bei der Betriebstemperatur des Brennstoffzellenstacks (im Bereich von 600°C bis 800°C) elektrisch isolierende Schicht der Dichtungsanordnung ist.

Besondere Ausgestaltungen der erfindungsgemäßen Dichtungsanordnung sind Gegenstand der Ansprüche 22 bis 40, deren Merkmale und Vorteile bereits vorstehend im Zusammenhang mit den besonderen Ausgestaltungen des erfindungsgemäßen Verfahrens erläutert worden sind.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer Dichtungsanordnung für eine Brennstoffzelleneinheit, welche zwei abzudichtende Bauteile und eine dazwischen angeordnete Isolationsschicht umfasst;
- Fig. 2: einen schematischen Schnitt durch eine zweite Ausführungsform einer Dichtungsanordnung, welche neben den zwei abzudichten- den Bauteilen und der Isolationsschicht eine die Isolationsschicht mit dem zweiten Bauteil verbindende Lotschicht umfasst; und
- Fig. 3: einen schematischen Schnitt durch eine dritte Ausführungsform einer Dichtungsanordnung, welche neben den beiden abzudich- tenden Bauteilen und der Isolationsschicht ein fest mit der Isola- tionsschicht verbundenes Zwischenelement und eine das Zwi- schenelement mit einem der abzudichtenden Bauteile verbin- dende Lotschicht umfasst.

Gleiche oder funktional äquivalente Elemente sind in allen Figuren mit denselben Bezugszeichen bezeichnet.

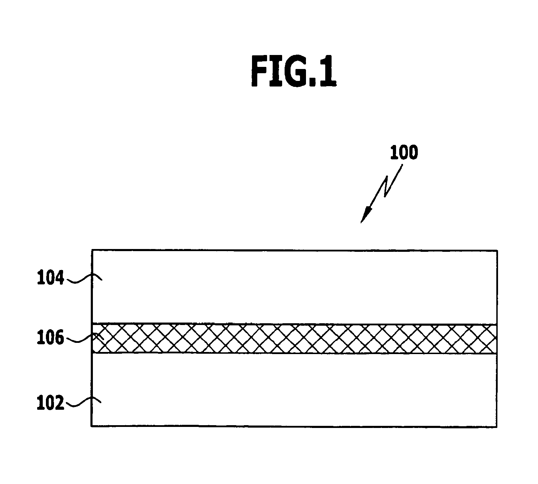

Ein Verfahren zur Herstellung der in Fig. 1 dargestellten ersten Ausführungsform einer als Ganzes mit 100 bezeichneten Dichtungsanordnung zum Abdichten zwischen einem metallischen ersten Bauteil 102 und einem metallischen zweiten Bauteil 104 eines Brennstoffzellenstacks mittels einer zwischen den Bauteilen 104 und 102 angeordneten, elektrisch isolierenden, keramischen Isolationsschicht 106 umfasst folgende Verfahrensschritte:
- nasschemisches Auftragen eines Isolationsschicht-Vormaterials auf das erste Bauteil 102;
- Inkontaktbringen des zweiten Bauteils 104 mit der Beschichtung aus dem Isolationsschicht-Vormaterial;
- Erwärmen der beiden Bauteile 102 und 104 und der dazwischen angeordneten Beschichtung aus dem Isolationsschicht-Vormaterial auf eine Sintertemperatur zur Erzeugung der gesinterten, elektrisch isolierenden, keramischen Isolationsschicht 106, welche direkt an die beiden Bauteile 102 und 104 angesintert ist und dadurch beide Bauteile 102 und 104 miteinander verbindet.

Bei dem ersten Bauteil 102 kann es sich beispielsweise um ein Gehäuseoberteil eines Gehäuses einer Brennstoffzelleneinheit handeln, und bei dem zweiten Bauteil 104 kann es sich um ein Gehäuseunterteil einer in einer Stapelrichtung eines Brennstoffzellenstacks auf die erste Brennstoffzelleneinheit folgenden weiteren Brennstoffzelleneinheit handeln.

Solche Brennstoffzelleneinheiten mit zweiteiligen Gehäusen, die aus einem Gehäuseunterteil und einem Gehäuseoberteil zusammengesetzt sind, sind beispielsweise in der DE 103 58 458 A1 offenbart, auf welche diesbezüglich Bezug genommen wird und welche durch Inbezugnahme zum Bestandteil dieser Anmeldung gemacht wird.

Das erste Bauteil 102 und/oder das zweite Bauteil 104 können insbesondere in der jeweiligen Brennstoffzelleneinheit als Bipolarplatte oder Interkonnektor dienen.

Beide Bauteile 102 und 104 können insbesondere einen Chromoxid bildenden Stahl umfassen.

Die beiden Bauteile 102 und 104 sind beispielsweise aus einem ferritischen, Chromoxid bildenden Edelstahl gebildet, beispielsweise aus dem Edelstahl Crofer 22 APU, welcher folgende Zusammensetzung aufweist:
22,2 Gewichtsprozent Cr; 0,46 Gewichtsprozent Mn; 0,06 Gewichtsprozent Ti;
0,07 Gewichtsprozent La; 0,002 Gewichtsprozent C; 0,02 Gewichtsprozent Al;
0,03 Gewichtsprozent Si; 0,004 Gewichtsprozent N; 0,02 Gewichtsprozent Ni; Rest Eisen.

Auf eine freie Oberfläche des metallischen ersten Bauteils 102 wird beispielsweise in einem Nasssprühverfahren eine Suspension aufgesprüht, welche folgende Zusammensetzung aufweist: 1 Gewichtsteil eines keramischen Pulvers; 1,5 Gewichtsteile Ethanol; 0,04 Gewichtsteile eines Dispergiermittels (beispielsweise Dolapix ET 85); 0,1 Gewichtsteile eines Bindemittels (beispielsweise Polyvinylacetat, PVAC).

Das keramische Pulver für die Suspension wird wie folgt hergestellt:

Zunächst wird eine Menge von Grundwerkstoff und mindestens eines Zusatzwerkstoffs in Form von Oxiden, Silikaten und/oder Phosphaten im gewünschten Mengenverhältnis abgewogen.

Als Grundwerkstoff können beispielsweise verwendet werden:
- LnSZ mit 3 bis 50 mol% Ln₂O₃ und Ln = Y oder eines der Lanthanoide von La bis Lu, wobei LnSZ ein mit Ln stabilisiertes Zirkoniumdioxid bezeichnet; hierunter fallen insbesondere Pyrochlore mit der Zusammensetzung Ln₂Zr₂O₇ oder 3YSZ (ein mit 3 mol Y stabilisiertes Zirkoniumdioxid), 8YSZ (ein mit 8 mol Y stabilisiertes Zirkoniumdioxid) oder 10YSZ (ein mit 10 mol Y stabilisiertes Zirkioniumdioxid);
- Titanate, insbesondere Magnesiumtitanate, wie beispielsweise MgTiO₃ oder Mg₂TiO₄
- MgAl₂O₄ (Magnesium-Aluminium-Spinell);
- Barium-Silikate.

Alle Grundwerkstoffe, insbesondere die vorstehend genannten, können einen Zusatz von MgO enthalten.

Dabei kann durch die Zugabe von MgO, welche von 0 bis 100 Vol.-% betragen kann, der thermische Ausdehnungskoeffizient der zu bildenden Isolationsschicht an einen gewünschten Wert angepasst werden, vorzugsweise an den Wert des thermischen Ausdehnungskoeffizienten des Materials der beiden Bauteile 102 und 104.

So hat ein Grundwerkstoff mit der Zusammensetzung MgAl₂O₄ MgO (im Volumenverhältnis 10:90) einen thermischen Ausdehnungskoeffizienten von 12,6·10⁻⁶K⁻¹.

Ein Grundwerkstoff mit der Zusammensetzung YSZ - MgO (im Volumenverhältnis 10:90) hat einen thermischen Ausdehnungskoeffizienten von 12,3·10⁻⁶K⁻¹.

Der verwendete Grundwerkstoff kann auch aus einer Kombination von YSZ, MgAl₂O₄ und/oder Barium-Silikaten, optional mit Zusatz von MgO, zusammengesetzt sein.

Als Zusatzwerkstoffe können insbesondere die folgenden Materialien verwendet werden:
- Borate, insbesondere solche, die einen Schmelzpunkt aufweisen, der mindestens 50°C über der Betriebstemperatur der Brennstoffzelle liegt, beispielsweise Li₂O - B₂O₃ oder NbO₅ - B₂O₃;
- Phosphate, insbesondere solche, die einen Schmelzpunkt aufweisen, der mindestens 50°C über der Betriebstemperatur der Brennstoffzelle liegt.

Die Betriebstemperatur der Brennstoffzelle liegt vorzugsweise im Bereich von 600°C bis 800°C.

Durch die Zugabe solcher Zusatzwerkstoffe kann die Schmelztemperatur der zu bildenden Isolationsschicht auf eine Temperatur unter 1.000°C abgesenkt werden, wodurch eine Versinterung durch Flüssigphasen möglich ist.

Die Zusatzwerkstoffe können in einem Volumenanteil von 0 bis 100 Vol.-% mit dem jeweiligen Grundwerkstoff vermischt werden.

Es ist auch möglich, eine Kombination von mehreren der vorstehend genannten Zusatzwerkstoffe mit einem der vorstehend genannten Grundwerkstoffe zu vermischen.

Bei einer bevorzugten Ausführungsform wird ein keramisches Pulver verwendet, welches 3YSZ und MgO im Volumenverhältnis 80:20 als Grundwerkstoff enthält. Dieser Grundwerkstoff wird mit einem Zusatz von Li₂O - B₂O₃ (im Gewichtsverhältnis 2:8) als Zusatzwerkstoff vermischt, wobei der Anteil des Zusatzwerkstoffes am gesamten keramischen Pulver von ungefähr 4 Gewichtsprozent bis ungefähr 12 Gewichtsprozent beträgt.

Der thermische Ausdehnungskoeffizient der hieraus gebildeten Isolationsschicht beträgt ungefähr 12·10⁻⁶K⁻¹.

Das abgewogene Pulver aus dem Grundwerkstoff und den Zusatzwerkstoffen wird zusammen mit Ethanol und ZrO₂-Mahlkugeln (mit einem mittleren Durchmesser von ungefähr 3 mm) in eine Polyethylen-Flasche abgefüllt.

Dabei beträgt das Gewichtsverhältnis Pulver : Ethanol : Mahlkugeln ungefähr 1:2:3.

Die Polyethylen-Flasche wird dicht verschlossen und 48 Stunden lang auf einer Rollbank gedreht.

Hierbei beträgt die Drehgeschwindigkeit der Flasche beispielsweise 250 U/min.

Nach der genannten Rotationszeit sollte die Korngröße des Pulvers d₉₀ = 1 µm betragen.

Wenn die genannte Mahldauer von 48 Stunden hierfür nicht ausreicht, muss die Mahlzeit entsprechend verlängert werden.

Eine Korngröße von d₉₀ = 1 µm bedeutet, dass 90 Gewichtsprozent der Partikel des keramischen Pulvers eine Korngröße von höchstens 1 mm aufweisen.

Nach Erreichen der gewünschten Korngröße des keramischen Pulvers werden die ZrO₂-Mahlkugeln aus der Mischung entfernt, und das keramische Pulver wird getrocknet.

Das keramische Pulver wird nicht kalziniert.

Anschließend wird das so erhaltene keramische Pulver mit Ethanol, Dispergiermittel und Binder zu der Suspension der vorstehend genannten Zusammensetzung vermengt.

Die so erhaltene Suspension wird im Nasssprühverfahren durch eine Sprühdüse auf das als Substrat dienende erste Bauteil 102 aufgesprüht.

Dabei beträgt der Durchmesser der Düsenöffnung, mit welcher die Suspension zerstäubt wird, ungefähr 0,5 mm.

Der Spritzdruck, mit dem die Suspension zur Düse gefördert wird, beträgt beispielsweise 0,3 bar.

Der Sprühabstand der Düse zum Substrat beträgt beispielsweise 15 cm.

Die Düse wird beispielsweise mit einer Geschwindigkeit von 230 mm/s über das Substrat hinweg verfahren.

Die Schicht des Isolationsschicht-Vormaterials wird in zwei bis vier Beschichtungszyklen, d.h. durch zwei- bis viermaliges Besprühen jedes Oberflächenbereichs des Substrats, auf das Substrat aufgetragen.

Alternativ zu dem vorstehend beschriebenen Nasssprühverfahren kann auch ein Siebdruckverfahren verwendet werden, um das keramische Pulver auf das Substrat aufzubringen.

Für ein solches Siebdruckverfahren wird eine Paste hergestellt, welche beispielsweise 50 Gewichtsprozent des keramischen Pulvers, 47 Gewichtsprozent Terpineol und 3 Gewichtsprozent Ethylcellulose enthält.

Das keramische Pulver wird dabei in derselben Weise hergestellt, wie dies vorstehend im Zusammenhang mit dem Nasssprühverfahren beschrieben worden ist.

Zur Verkürzung der erforderlichen Mahldauer können auch 2 bis 4 Gewichtsprozent (bezogen auf das Gewicht des keramischen Pulvers) eines Dispergiermittels (beispielsweise Dolapix ET 85) zugegeben werden, um die angegebene Korngröße zu erreichen.

Die Bestandteile der Paste werden in einem Walzenstuhl homogenisiert.

Anschließend erfolgt der Auftrag der Paste aus dem Isolationsschicht-Vormaterial auf das als Substrat dienende erste Bauteil 102 mittels einer dem Fachmann an sich bekannten Siebdruckanlage.

Das zweite Bauteil 104 wird auf der dem ersten Bauteil 102 abgewandten Seite mit der Schicht aus dem Isolationsschicht-Vormaterial in Kontakt gebracht, und anschließend wird die Anordnung aus den beiden Bauteilen 102 und 104 und der dazwischen angeordneten Schicht aus dem Isolationsschicht-Vormaterial in einen Sinterofen eingebracht.

Anschließend wird der Sinterofen beheizt, so dass die Bauteile 102 und 104 sowie die Schicht aus dem Isolationsschicht-Vormaterial auf eine Sintertemperatur von beispielsweise ungefähr 1.050°C erwärmt werden.

Auf dieser Sintertemperatur werden die Bauteile 102 und 104 sowie die Schicht aus dem Isolationsschicht-Vormaterial während einer Haltezeit von ungefähr 5 Stunden gehalten, wodurch die Schicht aus dem Isolationsschicht-Vormaterial versintert und daraus die Isolationsschicht 106 gebildet wird.

Die Erwärmung auf die Sintertemperatur kann dabei beispielsweise mit einer Aufheizgeschwindigkeit von 3 K/min erfolgen.

Nach Ablauf der Haltezeit wird die Dichtungsanordnung aus den beiden Bauteilen 102 und 104 und der dazwischen angeordneten Isolationsschicht, welche die beiden Bauteile 102 und 104 abdichtend und elektrisch isolierend miteinander verbindet, ungeregelt bis auf Umgebungstemperatur abgekühlt.

Die in Fig. 1 dargestellte erste Ausführungsform einer Dichtungsanordnung, bei welcher die beiden Bauteile 102 und 104 gleichzeitig mit der Bildung der Isolationsschicht 106 gefügt werden, bietet den Vorteil einer kostengünstigen Herstellung.

Allerdings kann diese Ausführungsform unter Umständen nur geringe Scherkräfte beim Thermozyklieren des Brennstoffzellenstacks aufnehmen.

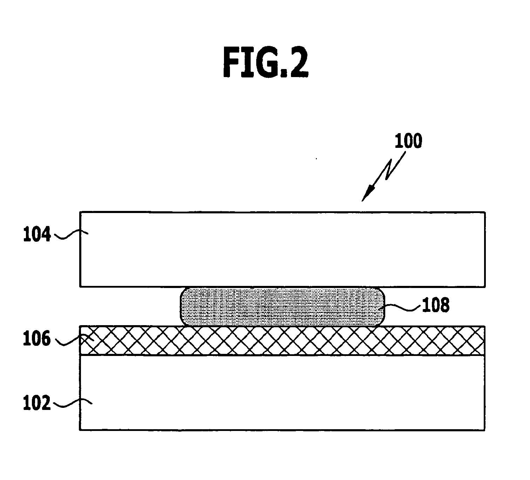

Eine in Fig. 2 dargestellte zweite Ausführungsform der Dichtungsanordnung 100 unterscheidet sich von der in Fig. 1 dargestellten ersten Ausführungsform dadurch, dass die Isolationsschicht 106, welche auf dem ersten Bauteil 102 ausgebildet ist, nicht direkt an dem zweiten Bauteil 104 festgelegt ist, sondern über eine Lotschicht 108 mit dem zweiten Bauteil 104 verbunden ist.

Diese Ausführungsform bietet den Vorteil, dass auftretende Scherkräfte beim Thermozyklieren über das duktile Verhalten des metallischen Lots der Lotschicht 108 ausgeglichen werden können.

Bei der Herstellung der Dichtungsanordnung 100 gemäß der in Fig. 2 dargestellten zweiten Ausführungsform wird wie folgt vorgegangen:

Zunächst wird eine Beschichtung aus Isolationsschicht-Vormaterial nasschemisch auf das erste Bauteil 102 aufgetragen.

Das Bauteil 102 mit der daran angeordneten Schicht aus dem Isolationsschicht-Vormaterial wird in einem Sinterofen auf eine Sintertemperatur erwärmt, wodurch aus dem Isolationsschicht-Vormaterial die Isolationsschicht 106 durch Versintern gebildet wird.

Nach dem Versintern der Isolationsschicht 106 wird ein metallisches Lotmaterial auf die freie Oberfläche der Isolationsschicht 106 und/oder auf eine freie Oberfläche des zweiten Bauteils 104 aufgetragen.

Anschließend wird das metallische zweite Bauteil 104 mit der Isolationsschicht 106 an dem metallischen ersten Bauteil 102 mittels des während der Lötung verflüssigten Lotmaterials, unter Anwendung eines Anpressdrucks, verlötet.

Geeignete metallische Lotmaterialien zur Erzeugung der Lotschicht 108 sind beispielsweise ein Nickelbasislot, ein Kupferbasislot oder ein Silberbasislot.

Geeignete Lotmaterialien sind insbesondere die folgenden:
- das Nickelbasislot mit der Bezeichnung Ni 102 gemäß der DIN EN 1044, mit der folgenden Zusammensetzung: 7 Gewichtsprozent Cr; 4,5 Gewichtsprozent Si; 3,1 Gewichtsprozent B; 3,0 Gewichtsprozent Fe; weniger als 0,06 Gewichtsprozent C; weniger als 0,02 Gewichtsprozent P; Rest Ni.
- das Kupferbasislot mit der Bezeichnung CU 202 gemäß der DIN EN 1044, mit der folgenden Zusammensetzung: 12 Gewichtsprozent Sn; 0,2 Gewichtsprozent P; Rest Cu.
- das Silberbasislot mit der Bezeichnung Ag4CuO, das von der Firma Innobraze GmbH, Deutschland, unter der Artikelnummer PA 9999999 vertrieben wird, mit der folgenden Zusammensetzung: 96 Mol-% Ag; 4 Mol-% CuO.

Im übrigen stimmt die in Fig. 2 dargestellte Ausführungsform einer Dichtungsanordnung hinsichtlich Aufbau, Funktion und Herstellungsweise mit der in Fig. 1 dargestellten ersten Ausführungsform überein, auf deren vorstehende Beschreibung insoweit Bezug genommen wird.

Bei der in Fig. 2 dargestellten zweiten Ausführungsform einer Dichtungsanordnung 100 kann das metallische Lot der Lotschicht 108 unter Umständen mit dem Material der Isolationsschicht 106 reagieren, was zur Folge haben kann, dass die elektrische Isolationswirkung der Isolationsschicht 106 verlorengeht und/oder dass der Verbund aus der Isolationsschicht 106 und der Lotschicht 108 versprödet und somit keine Scherkräfte mehr kompensieren kann.

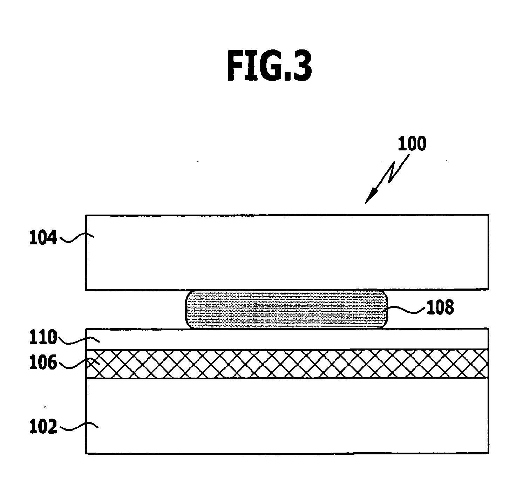

Eine in Fig. 3 dargestellte dritte Ausführungsform der Dichtungsanordnung 100 unterscheidet sich von der in Fig. 2 dargestellten zweiten Ausführungsform dadurch, dass die Isolationsschicht 106 nicht unmittelbar an die Lotschicht 108 angrenzt, sondern stattdessen ein Zwischenelement 110 zwischen der Isolationsschicht 106 und der Lotschicht 108 angeordnet ist.

Das Zwischenelement 110 ist vorzugsweise aus einem metallischen Material, insbesondere aus einem Stahlmaterial, gebildet.

Das Zwischenelement 110 kann insbesondere aus demselben Stahlmaterial gebildet sein wie das erste Bauteil 102 und/oder das zweite Bauteil 104.

Dadurch, dass bei der dritten Ausführungsform der Dichtungsanordnung 100 die Isolationsschicht 106 durch das Zwischenelement 110 von der Lotschicht 108 getrennt ist, können keine abträglichen Wechselwirkungen zwischen dem metallischen Lot der Lotschicht 108 und dem Material der Isolationsschicht 106 auftreten.

Insbesondere können keine spröden Phasen durch Reaktion des metallischen Lots mit dem Material der Isolationsschicht 106 entstehen. Die Duktilität des metallischen Lots der Lotschicht 108 bleibt daher bei dieser Ausführungsform in jedem Fall erhalten und kann beim Thermozyklieren des Brennstoffzellenstacks auftretende Scherkräfte kompensieren.

Bei der Herstellung der dritten Ausführungsform der Dichtungsanordnung 100 gemäß Fig. 3 wird wie folgt vorgegangen:

An dem metallischen ersten Bauteil 102 wird nasschemisch eine Beschichtung aus Isolationsschicht-Vormaterial aufgetragen.

Das metallische Zwischenelement 110 wird mit der freien Oberfläche der Beschichtung aus dem Isolationsschicht-Vormaterial in Kontakt gebracht.

Das erste Bauteil 102, das Zwischenelement 110 und die dazwischen angeordnete Schicht aus dem Isolationsschicht-Vormaterial werden in einen Sinterofen eingebracht und auf eine Sintertemperatur erwärmt, so dass durch Versinterung aus dem Isolationsschicht-Vormaterial die Isolationsschicht 106 entsteht, welche das Zwischenelement 110 in elektrisch isolierender Weise mit dem ersten Bauteil 102 verbindet.

Die Herstellung des Verbundes aus dem ersten Bauteil 102, der Isolationsschicht 106 und dem Zwischenelement 110 entspricht somit im wesentlichen der Herstellung des Verbundes aus dem ersten Bauteil 102, der Isolationsschicht 106 und dem zweiten Bauteil 104 bei der ersten Ausführungsform der Dichtungsanordnung 100.

Anschließend wird ein metallisches Lotmaterial auf die freie Oberfläche des Zwischenelements 110 und/oder auf eine freie Oberfläche des metallischen zweiten Bauteils 104 aufgetragen, und das metallische zweite Bauteil 104 wird mit dem Zwischenelement 110 mittels des während der Lötung verflüssigten Lotmaterials, unter Anwendung eines Anpressdrucks, verlötet.

Als Lotmaterial können dabei dieselben Lotmaterialien verwendet werden, die vorstehend im Zusammenhang mit der Herstellung der zweiten Ausführungsform der Dichtungsanordnung 100 beschrieben worden sind.

## Patentansprüche

1. Verfahren zur Herstellung einer elektrisch isolierenden Dichtungsanordnung (100) zum Abdichten zwischen zwei metallischen Bauteilen (102, 104) eines Brennstoffzellenstacks, umfassend folgende Verfahrensschritte:
- nasschemisches Auftragen eines Isolationsschicht-Vormaterials auf ein Substrat;
- Erwärmen des Isolationsschicht-Vormaterials auf eine Sintertemperatur zur Erzeugung einer gesinterten, elektrisch isolierenden, keramischen Isolationsschicht (106);
- direktes oder indirektes Verbinden der Isolationsschicht (106) mit den abzudichtenden metallischen Bauteilen (102, 104);
wobei die Isolationsschicht (106) mit mindestens einem der abzudichtenden Bauteile (104) mittels eines metallischen Lotes verlötet wird.

2. Verfahren nach Anspruch 1, **dadurch gekennzeichnet, dass** die Isolationsschicht (106) durch Flüssigphasensintern erzeugt wird.

3. Verfahren nach Anspruch 1, **dadurch gekennzeichnet, dass** die Isolationsschicht (106) durch Reaktivsintern erzeugt wird.

4. Verfahren nach einem der Ansprüche 1 bis 3, **dadurch gekennzeichnet, dass** das Isolationsschicht-Vormaterial MgO enthält.

5. Verfahren nach einem der Ansprüche 1 bis 4, **dadurch gekennzeichnet, dass** das Isolationsschicht-Vormaterial ein mit Yttrium oder mit einem Lanthanoiden stabilisiertes Zirkoniumdioxid enthält.

6. Verfahren nach einem der Ansprüche 1 bis 5, **dadurch gekennzeichnet, dass** das Isolationsschicht-Vormaterial Aluminiumoxid enthält.

7. Verfahren nach einem der Ansprüche 1 bis 6, **dadurch gekennzeichnet, dass** das Isolationsschicht-Vormaterial einen Mg-Al-Spinell enthält.

8. Verfahren nach einem der Ansprüche 1 bis 7, **dadurch gekennzeichnet, dass** das Isolationsschicht-Vormaterial Barium-Silikat enthält.

9. Verfahren nach einem der Ansprüche 1 bis 8, **dadurch gekennzeichnet, dass** das Isolationsschicht-Vormaterial einen Zusatzstoff zur Absenkung der Schmelztemperatur der Isolationsschicht (106) enthält.

10. Verfahren nach einem der Ansprüche 1 bis 9, **dadurch gekennzeichnet, dass** das Isolationsschicht-Vormaterial ein Borat enthält.

11. Verfahren nach Anspruch 10, **dadurch gekennzeichnet, dass** das Isolationsschicht-Vormaterial Li₂-B₂O₃ oder NbO₅-B₂O₃ enthält.

12. Verfahren nach einem der Anspruch 1 bis 11, **dadurch gekennzeichnet, dass** das Isolationsschicht-Vormaterial ein Phosphat enthält.

13. Verfahren nach einem der Ansprüche 1 bis 12, **dadurch gekennzeichnet, dass** die Isolationsschicht (106) während ihrer Erzeugung mit den abzudichtenden Bauteilen (102, 104) fest verbunden wird.

14. Verfahren nach einem der Ansprüche 1 bis 12, **dadurch gekennzeichnet, dass** die Isolationsschicht (106) nach ihrer Erzeugung mit mindestens einem der abzudichtenden Bauteile (104) verlötet wird.

15. Verfahren nach einem der Ansprüche 1 bis 14, **dadurch gekennzeichnet, dass** die Isolationsschicht (106) mit einem von den abzudichtenden Bauteilen (102, 104) verschiedenen Zwischenelement (110) fest verbunden wird.

16. Verfahren nach Anspruch 15, **dadurch gekennzeichnet, dass** die Isolationsschicht (106) während ihrer Erzeugung mit dem Zwischenelement (110) verbunden wird.

17. Verfahren nach einem der Ansprüche 15 oder 16, **dadurch gekennzeichnet, dass** das Zwischenelement (110) ein metallisches Material umfasst.

18. Verfahren nach einem der Ansprüche 15 bis 17, **dadurch gekennzeichnet, dass** das Zwischenelement (110) mit einem der abzudichtenden Bauteile (104) fest verbunden wird.

19. Verfahren nach Anspruch 18, **dadurch gekennzeichnet, dass** das Zwischenelement (110) mit einem der abzudichtenden Bauteile (104) verlötet wird.

20. Verfahren nach Anspruch 19, **dadurch gekennzeichnet, dass** das Zwischenelement (110) mit einem der abzudichtenden Bauteile (104) mittels eines metallischen Lotes verlötet wird.

21. Dichtungsanordnung zur Abdichtung zwischen zwei metallischen Bauteilen (102, 104) eines Brennstoffzellenstacks, umfassend zwei abzudichtende metallische Bauteile (102, 104); und
eine zwischen den zwei abzudichtenden metallischen Bauteilen (102, 104) angeordnete elektrisch isolierende, keramische Isolationsschicht (106),
**dadurch gekennzeichnet, dass** die Isolationsschicht (106) durch nasschemisches Auftragen eines Isolationsschicht-Vormaterials auf ein Substrat und anschließendes Erwärmen des Isolationsschicht-Vormaterials auf eine Sintertemperatur erzeugt ist und
dass die Isolationsschicht (106) mit mindestens einem der abzudichtenden Bauteile (104) mittels eines metallischen Lotes verlötet ist.

22. Dichtungsanordnung nach Anspruch 21, **dadurch gekennzeichnet, dass** die Isolationsschicht (106) durch Flüssigphasensintern erzeugt ist.

23. Dichtungsanordnung nach Anspruch 21, **dadurch gekennzeichnet, dass** die Isolationsschicht (106) durch Reaktivsintern erzeugt ist.

24. Dichtungsanordnung nach einem der Ansprüche 21 bis 23, **dadurch gekennzeichnet, dass** die Isolationsschicht (106) MgO enthält.

25. Dichtungsanordnung nach einem der Ansprüche 21 bis 24, **dadurch gekennzeichnet, dass** die Isolationsschicht (106) ein mit Yttrium oder mit einem Lanthanoiden stabilisiertes Zirkoniumdioxid enthält.

26. Dichtungsanordnung nach einem der Ansprüche 21 bis 25, **dadurch gekennzeichnet, dass** die Isolationsschicht (106) Aluminiumoxid enthält.

27. Dichtungsanordnung nach einem der Ansprüche 21 bis 26, **dadurch gekennzeichnet, dass** die Isolationsschicht (106) einen Mg-Al-Spinell enthält.

28. Dichtungsanordnung nach einem der Ansprüche 21 bis 27, **dadurch gekennzeichnet, dass** die Isolationsschicht (106) Barium-Silikat enthält.

29. Dichtungsanordnung nach einem der Ansprüche 21 bis 28, **dadurch gekennzeichnet, dass** die Isolationsschicht (106) einen Zusatzstoff zur Absenkung der Schmelztemperatur der Isolationsschicht (106) enthält.

30. Dichtungsanordnung nach 21 bis 29, **dadurch gekennzeichnet, dass** die Isolationsschicht (106) ein Borat enthält.

31. Dichtungsanordnung nach einem der Ansprüche 21 bis 30, **dadurch gekennzeichnet, dass** die Isolationsschicht (106) Li₂O B₂O₃ oder NbO₅ - B₂O₃ enthält.

32. Dichtungsanordnung nach einem der Ansprüche 21 bis 31, **dadurch gekennzeichnet, dass** die Isolationsschicht (106) ein Phosphat enthält.

33. Dichtungsanordnung nach einem der Ansprüche 21 bis 32, **dadurch gekennzeichnet, dass** die Isolationsschicht (106) an die abzudichtenden Bauteile (102, 104) angesintert ist.

34. Dichtungsanordnung nach einem der Ansprüche 21 bis 33, **dadurch gekennzeichnet, dass** die Isolationsschicht (106) mit mindestens einem der abzudichtenden Bauteile (104) verlötet ist.

35. Dichtungsanordnung nach einem der Ansprüche 21 bis 34, **dadurch gekennzeichnet, dass** die Dichtungsanordnung (100) ein von den abzudichtenden Bauteilen (102, 104) und von der Isolationsschicht (106) verschiedenes Zwischenelement (110) umfasst.

36. Dichtungsanordnung nach Anspruch 35, **dadurch gekennzeichnet, dass** die Isolationsschicht (106) an das Zwischenelement (110) angesintert ist.

37. Dichtungsanordnung nach einem der Ansprüche 35 oder 36, **dadurch gekennzeichnet, dass** das Zwischenelement (110) ein metallisches Material umfasst.

38. Dichtungsanordnung nach einem der Ansprüche 35 bis 37, **dadurch gekennzeichnet, dass** das Zwischenelement (110) mit einem der abzudichtenden Bauteile (104) fest verbunden ist.

39. Dichtungsanordnung nach Anspruch 38, **dadurch gekennzeichnet, dass** das Zwischenelement (110) mit einem der abzudichtenden Bauteile (104) verlötet ist.

40. Dichtungsanordnung nach Anspruch 39, **dadurch gekennzeichnet, dass** das Zwischenelement (110) mit einem der abzudichtenden Bauteile (104) mittels eines metallischen Lotes verlötet ist.

## Claims

1. Method for producing an electrically insulating sealing arrangement (100) for sealing between two metallic components (102, 104) of a fuel cell stack, comprising the following method steps:
- applying an insulating layer starting material to a substrate in a wet-chemical process;
- heating the insulating layer starting material to a sinter temperature to produce a sintered, electrically insulating, ceramic insulating layer (106);
- directly or indirectly connecting the insulating layer (106) to the metallic components (102, 104) to be sealed;
wherein the insulating layer (106) is brazed to at least one of the components (104) to be sealed by means of a metallic braze.

2. Method according to claim 1, **characterised in that** the insulating layer (106) is produced by liquid phase sintering.

3. Method according to claim 1, **characterised in that** the insulating layer (106) is produced by reactive sintering.

4. Method according to any one of claims 1 to 3, **characterised in that** the insulating layer starting material contains MgO.

5. Method according to any one of claims 1 to 4, **characterised in that** the insulating starting material contains a zirconium dioxide stabilised with yttrium or with a lanthanoid.

6. Method according to any one of claims 1 to 5, **characterised in that** the insulating layer starting material contains aluminium oxide.

7. Method according to any one of claims 1 to 6, **characterised in that** the insulating layer starting material contains an Mg-Al-spinel.

8. Method according to any one of claims 1 to 7, **characterised in that** the insulating layer starting material contains barium silicate.

9. Method according to any one of claims 1 to 8, **characterised in that** the insulating layer starting material contains an additive to lower the melting temperature of the insulating layer (106).

10. Method according to any one of claims 1 to 9, **characterised in that** the insulating layer starting material contains a borate.

11. Method according to claim 10, **characterised in that** the insulating layer starting material contains Li₂O-B₂O₃or NbO₅-B₂O₃.

12. Method according to any one of claims 1 to 11, **characterised in that** the insulating starting material contains a phosphate.

13. Method according to any one of claims 1 to 12, **characterised in that**, during its production, the insulating layer (106) is fixedly connected to the components (102, 104) to be sealed.

14. Method according to any one of claims 1 to 12, **characterised in that** the insulating layer (106) is brazed after its production to at least one of the components (104) to be sealed.

15. Method according to any one of claims 1 to 14, **characterised in that** the insulating layer (106) is fixedly connected to an intermediate element (110), which is different from the components (102, 104) to be sealed.

16. Method according to claim 15, **characterised in that**, during its production, the insulating layer (106) is connected to the intermediate element (110).

17. Method according to either of claims 15 or 16, **characterised in that** the intermediate element (110) comprises a metallic material.

18. Method according to any one of claims 15 to 17, **characterised in that** the intermediate element (110) is fixedly connected to one of the components (104) to be sealed.

19. Method according to claim 18, **characterised in that** the intermediate element (110) is brazed to one of the components (104) to be sealed.

20. Method according to claim 19, **characterised in that** the intermediate element (110) is brazed by means of a metallic braze to one of the components (104) to be sealed.

21. Sealing arrangement for sealing between two metallic components (102, 104) of a fuel cell stack, comprising two metallic components (102, 104) to be sealed; and an electrically insulating, ceramic insulating layer (106) arranged between the two metallic components (102, 104) to be sealed, **characterised in that** the insulating layer (106) is produced by application of an insulating layer starting material to a substrate in a wet-chemical process and subsequent heating of the insulating layer starting material to a sinter temperature and **in that** the insulating layer (106) is brazed by means of a metallic braze to at least one of the components (104) to be sealed.

22. Sealing arrangement according to claim 21, **characterised in that** the insulating layer (106) is produced by liquid phase sintering.

23. Sealing arrangement according to claim 21, **characterised in that** the insulating layer (106) is produced by reactive sintering.

24. Sealing arrangement according to any one of claims 21 to 23, **characterised in that** the insulating layer (106) contains MgO.

25. Sealing arrangement according to any one of claims 21 to 24, **characterised in that** the insulating layer (106) contains a zirconium dioxide stabilised with yttrium or with a lanthanoid.

26. Sealing arrangement according to any one of claims 21 to 25, **characterised in that** the insulating layer (106) contains aluminium oxide.

27. Sealing arrangement according to any one of claims 21 to 26, **characterised in that** the insulating layer (106) contains an Mg-Al-spinel.

28. Sealing arrangement according to any one of claims 21 to 27, **characterised in that** the insulating layer (106) contains barium silicate.

29. Sealing arrangement according to any one of claims 21 to 28, **characterised in that** the insulating layer (106) contains an additive for lowering the melting temperature of the insulating layer (106).

30. Sealing arrangement according to claim 21 to 29, **characterised in that** the insulating layer (106) contains a borate.

31. Sealing arrangement according to any one of claims 21 to 30, **characterised in that** the insulating layer (106) contains Li₂O-B₂O₃ or NbO₅-B₂O₃.

32. Sealing arrangement according to any one of claims 21 to 31, **characterised in that** the insulating layer (106) contains a phosphate.

33. Sealing arrangement according to any one of claims 21 to 32, **characterised in that** the insulating layer (106) is sintered onto the components (102, 104) to be sealed.

34. Sealing arrangement according to any one of claims 21 to 33, **characterised in that** the insulating layer (106) is brazed to at least one of the components (104) to be sealed.

35. Sealing arrangement according to any one of claims 21 to 34, **characterised in that** the sealing arrangement (100) comprises an intermediate element (110), which is different from the components (102, 104) to be sealed and from the insulating layer (106).

36. Sealing arrangement according to claim 35, **characterised in that** the insulating layer (106) is sintered onto the intermediate element (110).

37. Sealing arrangement according to either of claims 35 or 36, **characterised in that** the intermediate element (110) comprises a metallic material.

38. Sealing arrangement according to any one of claims 35 to 37, **characterised in that** the intermediate element (110) is fixedly connected to one of the components (104) to be sealed.

39. Sealing arrangement according to claim 38, **characterised in that** the intermediate element (110) is brazed to one of the components (104) to be sealed.

40. Sealing arrangement according to claim 39, **characterised in that** the intermediate element (110) is brazed to one of the components (104) to be sealed by means of a metallic braze.

## Revendications

1. Procédé de fabrication d'un dispositif d'étanchéité électriquement isolant (100) pour assurer l'étanchéité entre deux composants métalliques (102, 104) d'un stack de piles à combustible, comprenant les étapes suivantes :
- application par voie humide d'un pré-matériau, jouant le rôle de couche d'isolation, sur un substrat ;
- réchauffement du pré-matériau à une température de frittage pour produire une couche céramique frittée électriquement isolante (106) ;
- liaison directe ou indirecte de la couche d'isolation (106) avec les composants métalliques (102, 104) dont il s'agit d'assurer l'étanchéité ;
la couche d'isolation (106) étant brasée avec au moins l'un des composants (104), dont il s'agit d'assurer l'étanchéité, avec une matière de brasage métallique.

2. Procédé selon la revendication 1,
**caractérisé en ce que**
la couche d'isolation (106) est produite par frittage en phase liquide.

3. Procédé selon la revendication 1,
**caractérisé en ce que**
la couche d'isolation (106) est produite par frittage réactif.

4. Procédé selon l'une quelconque des revendications 1 à 3,
**caractérisé en ce que**
le pré-matériau, jouant le rôle de couche d'isolation, contient du MgO.

5. Procédé selon l'une quelconque des revendications 1 à 4,
**caractérisé en ce que**
le pré-matériau, jouant le rôle de couche d'isolation, contient un dioxyde de zirconium stabilisé avec de l'yttrium ou un lanthanoïde.

6. Procédé selon l'une quelconque des revendications 1 à 5,
**caractérisé en ce que**
le pré-matériau, jouant le rôle de couche d'isolation, contient de l'oxyde d'aluminium.

7. Procédé selon l'une quelconque des revendications 1 à 6,
**caractérisé en ce que**
le pré-matériau, jouant le rôle de couche d'isolation, contient un spinelle Mg-Al.

8. Procédé selon l'une quelconque des revendications 1 à 7,
**caractérisé en ce que**
le pré-matériau, jouant le rôle de couche d'isolation, contient du silicate de baryum.

9. Procédé selon l'une quelconque des revendications 1 à 8,
**caractérisé en ce que**
le pré-matériau, jouant le rôle de couche d'isolation, contient un additif pour abaisser la température de fusion de la couche d'isolation (106).

10. Procédé selon l'une quelconque des revendications 1 à 9,
**caractérisé en ce que**
le pré-matériau, jouant le rôle de couche d'isolation, contient un borate.

11. Procédé selon la revendication 10,
**caractérisé en ce que**
le pré-matériau, jouant le rôle de couche d'isolation, contient du Li₂O-B₂O₃ ou du NbO₅-B₂O₃.

12. Procédé selon l'une quelconque des revendications 1 à 11,
**caractérisé en ce que**
le pré-matériau, jouant le rôle de couche d'isolation, contient un phosphate.

13. Procédé selon l'une quelconque des revendications 1 à 12,
**caractérisé en ce que**
la couche d'isolation (106), pendant sa production, est solidement reliée aux composants (102, 104), dont il s'agit d'assurer l'étanchéité.

14. Procédé selon l'une quelconque des revendications 1 à 12,
**caractérisé en ce que**
la couche d'isolation (106), une fois produite, est brasée avec au moins l'un des composants (104), dont il s'agit d'assurer l'étanchéité.

15. Procédé selon l'une quelconque des revendications 1 à 14,
**caractérisé en ce que**
la couche d'isolation (106) est solidement reliée à un élément intermédiaire (110) différent des composants (102, 104), dont il s'agit d'assurer l'étanchéité.

16. Procédé selon la revendication 15,
**caractérisé en ce que**
la couche d'isolation (106), pendant sa production, est reliée à l'élément intermédiaire (110).

17. Procédé selon l'une quelconque des revendications 15 ou 16,
**caractérisé en ce que**
l'élément intermédiaire (110) renferme une matière métallique.

18. Procédé selon l'une quelconque des revendications 15 à 17,
**caractérisé en ce que**
l'élément intermédiaire (110) est solidement relié à l'un des composants (104), dont il s'agit d'assurer l'étanchéité.

19. Procédé selon la revendication 18,
**caractérisé en ce que**
l'élément intermédiaire (110) est brasé avec l'un des composants (104), dont il s'agit d'assurer l'étanchéité.

20. Procédé selon la revendication 19,
**caractérisé en ce que**
l'élément intermédiaire (110) est brasé avec au moins l'un des composants (104), dont il s'agit d'assurer l'étanchéité, avec une matière de brasage métallique.

21. Dispositif d'étanchéité pour assurer l'étanchéité entre deux composants métalliques (102, 104) d'un stack de piles à combustible renfermant
deux composants (102, 104), dont il s'agit d'assurer l'étanchéité ; et
une couche d'isolation (106) céramique électriquement isolante placée entre les deux composants métalliques (102, 104), dont il s'agit d'assurer l'étanchéité,
**caractérisé en ce qu'**
on applique la couche d'isolation (106) par voie humide d'un pré-matériau, jouant le rôle de couche d'isolation, sur un substrat, puis on chauffe le pré-matériau à une température de frittage et
on brase la couche d'isolation (106) avec au moins l'un des composants (104), dont il s'agit d'assurer l'étanchéité, avec une matière de brasage métallique.

22. Dispositif d'étanchéité selon la revendication 21,
**caractérisé en ce que**
la couche d'isolation (106) est produite par frittage en phase liquide.

23. Dispositif d'étanchéité selon la revendication 21,
**caractérisé en ce que**
la couche d'isolation (106) est produite par frittage réactif.

24. Dispositif d'étanchéité selon l'une quelconque des revendications 21 à 23,
**caractérisé en ce que**
la couche d'isolation (106) contient du MgO.

25. Dispositif d'étanchéité selon l'une quelconque des revendications 21 à 24,
**caractérisé en ce que**
la couche d'isolation (106) contient un dioxyde de zirconium stabilisé avec de l'yttrium ou un lanthanoïde.

26. Dispositif d'étanchéité selon l'une quelconque des revendications 21 à 25,
**caractérisé en ce que**
la couche d'isolation (106) contient de l'oxyde d'aluminium.

27. Dispositif d'étanchéité selon l'une quelconque des revendications 21 à 26,
**caractérisé en ce que**
la couche d'isolation (106) contient un spinelle Mg-Al.

28. Dispositif d'étanchéité selon l'une quelconque des revendications 21 à 27,
**caractérisé en ce que**
la couche d'isolation (106) contient du silicate de baryum.

29. Dispositif d'étanchéité selon l'une quelconque des revendications 21 à 28,
**caractérisé en ce que**
la couche d'isolation (106) contient un additif pour abaisser la température de fusion de la couche d'isolation (106).

30. Dispositif d'étanchéité selon l'une quelconque des revendications 21 à 29,
**caractérisé en ce que**
la couche d'isolation (106) contient un borate.

31. Dispositif d'étanchéité selon l'une quelconque des revendications 21 à 30,
**caractérisé en ce que**
la couche d'isolation (106) contient du Li₂O-B₂O₃ ou du NbO₅-B₂O₃.

32. Dispositif d'étanchéité selon l'une quelconque des revendications 21 à 31,
**caractérisé en ce que**
la couche d'isolation (106) contient un phosphate.

33. Dispositif d'étanchéité selon l'une quelconque des revendications 21 à 32,
**caractérisé en ce que**
la couche d'isolation (106) est frittée sur les composants (102, 104), dont il s'agit d'assurer l'étanchéité.

34. Dispositif d'étanchéité selon l'une quelconque des revendications 21 à 33,
**caractérisé en ce que**
la couche d'isolation (106) est brasée avec au moins un des composants (104), dont il s'agit d'assurer l'étanchéité.

35. Dispositif d'étanchéité selon l'une quelconque des revendications 21 à 34,
**caractérisé en ce que**
le dispositif d'étanchéité (100) renferme un élément intermédiaire (110) différent des composants (102, 104), dont il s'agit d'assurer l'étanchéité, et de la couche d'isolation (106).

36. Dispositif d'étanchéité selon la revendication 35,
**caractérisé en ce que**
la couche d'isolation (106) est frittée sur l'élément intermédiaire (110).

37. Dispositif d'étanchéité selon l'une quelconque des revendications 35 ou 36,
**caractérisé en ce que**
l'élément intermédiaire (110) renferme une matière métallique.

38. Dispositif d'étanchéité selon l'une quelconque des revendications 35 à 37,
**caractérisé en ce que**
l'élément intermédiaire (110) est solidement relié à l'un des composants (104), dont il s'agit d'assurer l'étanchéité.

39. Dispositif d'étanchéité selon la revendication 38,
**caractérisé en ce que**
l'élément intermédiaire (110) est brasé à l'un des composants (104), dont il s'agit d'assurer l'étanchéité.

40. Dispositif d'étanchéité selon la revendication 39,
**caractérisé en ce que**
l'élément intermédiaire (110) est brasé, avec une matière de brasage métallique, à l'un des composants (104), dont il s'agit d'assurer l'étanchéité.
